# EUROPEAN PATENT APPLICATION

(11) **EP 4 552 841 A1**
(43) Date of publication of application: **14.05.2025**
(21) Application number: 23842426.1
(22) Date of filing: 21.07.2023
(51) Int. Cl.: B32B 17/10, C03C 27/12, E06B 9/24

(54) **SWITCHABLE TRANSPARENT GLASS, VEHICLE DOOR ASSEMBLY, AND VEHICLE**

(30) Priority: 22.07.2022 CN 202210866651
(71) Applicant: Fuyao Glass Industry Group Co., Ltd., Fuqing, Fujian 350300 (CN)
(72) Inventor: GUO, Yong, Fuqing, Fujian 350300 (CN); YAN, Zheng, Fuqing, Fujian 350300 (CN)
(74) Representative: Patentanwälte Olbricht Buchhold Keulertz
(86) International application number: PCT/CN2023/108550
(87) International publication number: WO 2024/017364

(57) **Abstract**

Disclosed in the present disclosure are switchable glass, a vehicle door assembly, and a vehicle, including two glass plates (1); at least one switchable film (3) provided with a plurality of edge portions (31); at least two bonding layers (2) sandwiched between the two glass plates (1), each bonding layer (2) including at least one light-shielding portion (23) and a light-transmitting portion (22) which are connected to each other, and the switchable film (3) being sandwiched between the light-transmitting portions (22) of two of the bonding layers (2); and a protective layer (4) spliced with the plurality of edge portions (31) of the switchable film (3) and sandwiched between two of the bonding layers (2), and at least one edge portion (31) of the switchable film (3) is a visual edge portion (311), and the splicing position of the visual edge portion (311) and the protective layer (4) is sandwiched between the light-shielding portions (23) of two of the bonding layers (2). The present disclosure is capable of effectively avoiding the shortening of service life caused by the degradation of the edge portions (31) of the switchable film (3), and uses the light-shielding portion (23) to shield the splicing position of the visual edge portion (311) of the switchable film (3) and the protective layer (4) so as to prevent a joint bright line at the splicing position of the visual edge portion (311) and the protective layer (4) from affecting visual experience when the switchable glass is observed.

## Description

### RELATED APPLICATION

The present disclosure claims priority to Chinese Patent Application NO. 202210866651.3, entitled "switchable glass, vehicle door assembly, and vehicle" and filed on July 22, 2022.

### TECHNICAL FIELD

The present disclosure relates to the technical field of glass, and particularly to a switchable glass, a vehicle door assembly and a vehicle.

### BACKGROUND

Switchable glass refers to a dimming product formed by hot pressing a switchable film and two adhesive films together between two pieces of glass, in which the switchable film has a dimming function and the adhesive layer has an adhesion function. Through the control of an external electric field, the switchable film can quickly change from a state of colorless transparent or tinted transparent to a state of non-transparent, thereby controlling the light transmission amount. In the existing switchable glass, an edge portion of the switchable film is exposed, which easily leads to deterioration and shortens the service life.

### SUMMARY

The present disclosure aims to provide a switchable glass, a vehicle door assembly and a vehicle, so as to solve the technical problems at present that an edge portion of a switchable film of a switchable glass is exposed, which easily leads to deterioration and shortens the service life.

The above objective of the present disclosure can be achieved by adopting the following technical solution:
The present disclosure provides a switchable glass, including: two glass plates; at least one switchable film which has a plurality of edge portions; at least two adhesive layers which are sandwiched between two of the glass plates, each of the adhesive layers includes at least one light-shielding portion and a light-transmitting portion which are connected to each other, and the switchable film is sandwiched between the light-transmitting portions of two of the adhesive layers; and a protective layer spliced with a plurality of edge portions of the switchable film and sandwiched between two of the adhesive layers, and at least one of the edge portions of the switchable film is a visual edge portion, and a splicing position of the visual edge portion and the protective layer is sandwiched between the light-shielding portions of two of the adhesive layers.

The present disclosure further provides a vehicle door assembly, including the aforementioned switchable glass, the switchable glass is fitted on a vehicle door body, and the two glass plates are an outer-layer glass plate and an inner-layer glass plate respectively, with the outer-layer glass plate facing outside of the vehicle and the inner-layer glass plate facing inside of the vehicle.

The present disclosure further provides a vehicle, including the aforementioned switchable glass.

As compared with the prior art, the characteristics and advantages of the present disclosure are at least as follows:
In the switchable glass of the present disclosure, the protective layer is spliced with the edge portions of the switchable film and sandwiched between two of the adhesive layers, so as to protect the edge portions of the switchable film, and effectively prevent shortening the service life resulted by the deterioration of the edge portions of the switchable film. Since the optical properties of the protective layer and the switchable film are different, a joint bright line appears at the splicing position of the protective layer and the edge portion. Therefore, in the present disclosure, the light-shielding portion is disposed on the adhesive layer to shield the splicing position of the visible edge portion of the switchable film and the protective layer, so as to prevent the joint bright line at the splicing position of the visible edge portion and the protective layer from affecting the visual experience during observation of the switchable glass.

### BRIEF DESCRIPTION OF THE DRAWINGS

In order to more clearly illustrate the technical solutions in the embodiment of the present disclosure or in the prior art, the drawings required in the description of the embodiments or the prior art will be briefly introduced below. Obviously, the drawings involved in the following description only illustrate some embodiments of the present disclosure, and those of ordinary skill in the art may obtain other drawings from these drawings without paying any inventive effort.
FIG. 1 illustrates a cross-sectional view of a switchable glass according to the present disclosure.
FIG. 2 illustrates a plan view of a switchable glass according to the present disclosure.
FIG. 3 illustrates a cross-sectional view of a switchable glass according to a second embodiment of the present disclosure.
FIG. 4 illustrates a cross-sectional view of a switchable glass according to a third embodiment of the present disclosure.
FIG. 5 illustrates a plan view of a switchable glass according to an embodiment of the present disclosure.
FIG. 6 illustrates a plan view of a switchable glass according to a fourth embodiment of the present disclosure.
FIG. 7 illustrates a plan view of a switchable glass according to a fifth embodiment of the present disclosure.
FIG. 8 illustrates a plan view of a switchable glass according to a sixth embodiment of the present disclosure.
FIG. 9 illustrates a plan view of a switchable glass according to a seventh embodiment of the present disclosure.
FIG. 10 illustrates a plan view of a switchable glass according to an eighth embodiment of the present disclosure.
FIG. 11 illustrates a plan view of a switchable glass according to a ninth embodiment of the present disclosure.
FIG. 12 illustrates a plan view of a switchable glass according to a tenth embodiment of the present disclosure.
FIG. 13 illustrates a plan view of a switchable glass according to an eleventh embodiment of the present disclosure.

In the drawings,
1: glass plate; 11: inner-layer glass plate; 12: outer-layer glass plate; 121: mounting portion; 2: bonding layer; 21: first adhesive film; 211: fringe portion; 22: light-transmitting portion; 23: light-shielding portion; 3: switchable film; 31: edge portion; 311: visible edge portion; 312: mounting edge portion; 4: protective layer; 41: second adhesive film; 4': protective layer; 4": protective layer; 5: adhesive layer; 6: electrode.

### DESCRIPTION OF THE EMBODIMENTS

The technical solutions in the embodiments of the present disclosure will be clearly and completely described below with reference to the drawings for the embodiments of the present disclosure. Obviously, those described are only a part, rather than all, of the embodiments of the present disclosure. Based on the embodiments in the present disclosure, any other embodiment obtained by those of ordinary skill in the art without paying any inventive effort should fall within the protection scope of the present disclosure.

### Embodiment 1

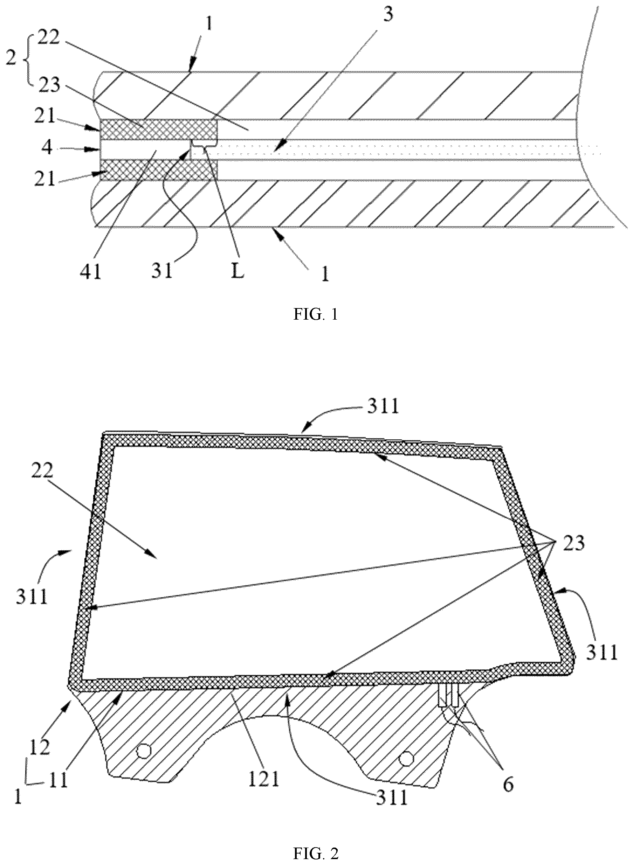

As illustrated in FIGS. 1 and 2, the present disclosure provides a switchable glass, including: two glass plates 1; at least one switchable film 3 which has a plurality of edge portions 31; at least two bonding layers 2 which are sandwiched between the two glass plates 1, and each of the bonding layers 2 includes at least one light-shielding portion 23 and a light-transmitting portion 22which are connected to each other, and the switchable film 3 is sandwiched between the light-transmitting portions 22 of two of the bonding layers 2; and a protective layer 4 spliced with a plurality of edge portions 31 of the switchable film 3 and sandwiched between two of the bonding layers 2, and at least one of the edge portions 31 of the switchable film 3 is a visual edge portion 311, and a splicing position of the visual edge portion 311 and the protective layer 4 is sandwiched between the light-shielding portions 23 of two of the bonding layers 2.

In the switchable glass of the present disclosure, the protective layer 4 is spliced with the edge portions 31 of the switchable film 3 and sandwiched between two of the bonding layers 2, so as to protect the edge portions 31 of the switchable film 3, and effectively prevent shortening the service life resulted by the deterioration of the edge portions of the switchable film. Since the optical properties of the protective layer 4 and the switchable film 3 are different, a joint bright line appears at the splicing position of the protective layer 4 and the edge portion 31. Therefore, in the present disclosure, the light-shielding portion 23 is disposed on the bonding layer 2 to shield the splicing position of the visible edge portion 311 of the switchable film 3 and the protective layer 4, so as to prevent the joint bright line at the splicing position of the visible edge portion 311 and the protective layer 4 from affecting the visual experience during observation of the switchable glass.

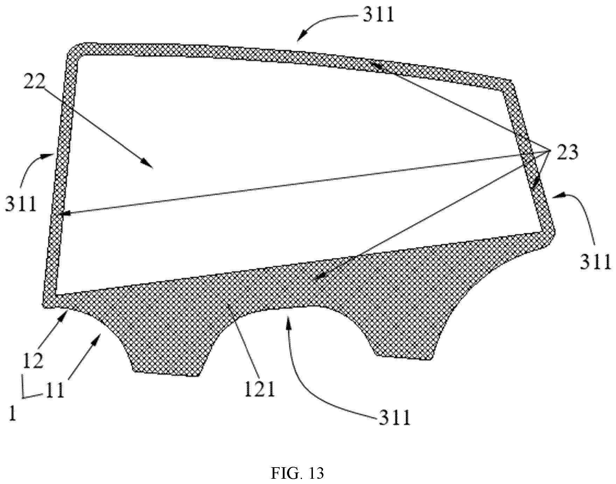

Specifically, the visible edge portion 311 is an edge portion observable when the switchable glass is in a use state. As illustrated in FIG. 2, the switchable film 3 is connected to an external power supply through two electrodes 6, thereby forming an external electric field to adjust a light transmission amount of the switchable film 3. In order to ensure that the light-shielding portion 23 is capable of completely shielding the joint bright line at the splicing position of the visible edge portion 311 and the protective layer 4, as illustrated in FIG. 1, a distance L between a joint position of the light-shielding portion 23 and the light-transmitting portion 22, and the splicing position of the visible edge portion 311 and the protective layer 4 is not less than 3 mm. In addition, as illustrated in FIGS. 2 and 13, the shape of the light-shielding portion 23 is not particularly limited, so long as the splicing position of the visible edge portion 311 and the protective layer 4 can be shielded. The shape of the switchable film 3 is not particularly limited, and may be the same as or different from the shape of the two glass plates 1, so long as the visible area of the switchable glass in the use state can be shielded. Similarly, the shape of the protective layer 4 is not particularly limited, and may be the same as or different from that of the fringe portions of the two glass plates 1, so long as the switchable film 3can be enclosed. For example, the switchable film 3 may be enclosed by a plurality of split strip structures or an integral hollow square structure.

In this embodiment, the switchable film 3 is a PDLC (polymer dispersed liquid crystal) switchable film or an SPD (suspended particles device) switchable film, and one switchable film 3 is bonded to two glass plates 1 together through two of the bonding layers 2. Optionally, the switchable film is an LC (liquid crystal) switchable film, and two switchable films are bonded and fixed to each other through one bonding layer, and are bonded to the two glass plates together through other two bonding layers. Optionally, the switchable film may also be configured as other types of switchable films in the prior art.

As illustrated in FIGS. 1, 2 and 3, in the embodiment of the present disclosure, the adhesive layer 2 is a first adhesive film 21, and the first adhesive film has a transparent area constituting the light-transmitting portion 22, and a colored area constituting the light-shielding portion 23. The first adhesive film 21 is made of Polyvinyl butyral (PVB), which has an excellent adhesion to the glass plate 1, and the transparent area of the first adhesive film 21 has excellent optical transparency. Specifically, the first adhesive film 21 is integrally formed by an extrusion process. The first adhesive film 21 has a thickness of 0.38 mm to 0.76 mm.

Optionally, the bonding layer is made of, but is not limited to, polycarbonate (PC), sound insulation PVB (Polyvinyl Butyral), light-shielding tape PVB, thermal control PVB, ethylene-vinyl acetate (EVA), thermoplastic polyurethane (TPU), polyoxymethylene (POM), polybutylene terephthalate (PBT), polyethylene vinyl acetate (PET), polyethylene naphthalate (PEN), polyvinyl chloride (PVC), polyvinyl fluoride (PVF), polyacrylate (PA), polymethyl methacrylate (PMMA), or polyurethane foam (PUR). Optionally, the bonding layer includes a transparent PVB adhesive film spliced with and a colored PVB adhesive film or other sheet-like light-shielding structures, and the transparent PVB adhesive film forms a transparent portion, and the colored PVB adhesive film or other sheet-like light-shielding structures form the light-shielding portion. Optionally, the light-transmitting portion is formed of any other material with optical transparency and adhesiveness.

As illustrated in FIG. 1, in this embodiment, the protective layer 4 is a second adhesive film 41, the second adhesive film 41 is transparent or colored. The glass plate 1, the first adhesive film 21, the switchable film 3 and the second adhesive film 41 are integrated by hot pressing. There is no need to provide any other binding agent between the protective layer 4 and the switchable film 3, between the protective layer 4 and the bonding layer 2, between the bonding layer 2 and the switchable film 3, and between the bonding layer 2 and the glass plate 1, and the two glass plates 1, the two first adhesive films 21, the switchable film 3 and a plurality of second adhesive films 41 can be integrated using the viscosity of the first adhesive film 21 and the second adhesive film 41 after hot pressing. Specifically, the second adhesive film 41 is also made of PVB. A thickness of the protective layer 4 formed by hot pressing the second adhesive film 41 is the same as or approximately equivalent to the thickness of the switchable film 3. The thickness of the second adhesive film 41 is 0.38 mm to 0.76 mm. A thickness of the switchable film 3 is 0.38 mm to 0.76 mm. Both the first adhesive film 21 and the second adhesive film 41 may be one or combinations selected from an ordinary PVB adhesive film, a sound insulation PVB adhesive film, a heat insulation PVB adhesive film, a heat insulation and sound insulation PVB adhesive film or any other high-performance (e.g., ultraviolet ray filtration, etc.) PVB adhesive film.

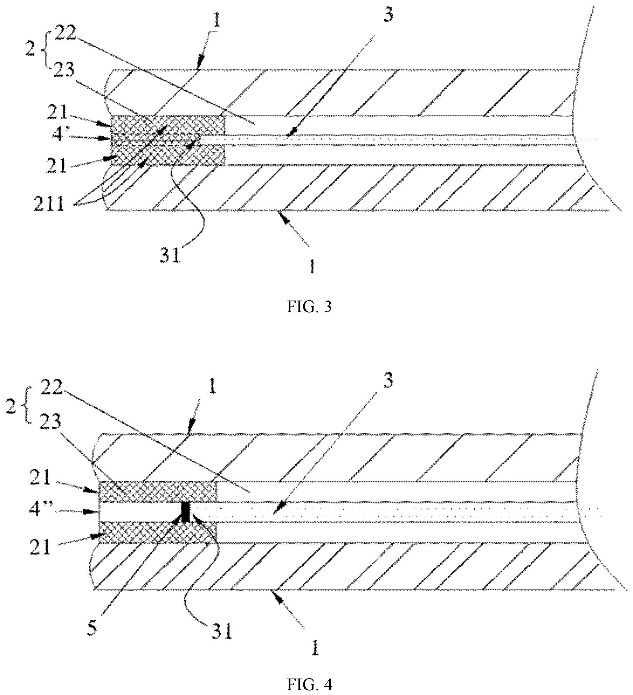

As illustrated in FIG. 3, in a second embodiment, the glass plate 1, the bonding layer 2 and the switchable film 3 are integrated by hot pressing; the bonding layer 2 has a plurality of fringe portions 211, and the fringe portions 211 of two of the bonding layers 2 are attached to each other to shield at the outside of the edge portion 31 of the switchable film 3 during hot pressing, thereby forming a protective layer 4'. Specifically, the fringe portion 211 of the bonding layer 2 is the edge portion of the first adhesive film 21 and the area close to the edge portion of the first adhesive film 21. The thickness of the switchable film 3 is less than or equal to 0.2 mm. When the thickness of the switchable film 3 is greater than 0.2 mm, a gap between the fringe portions 211 of two of the bonding layers 2 is too large, so that it is difficult for the fringe portions 211 of two of the bonding layers 2 to be attached to each other to form the protective layer 4' during hot pressing, or the formed protective layer 4' cannot be spliced with the edge portion 31 of the switchable film 3.

As illustrated in FIG. 4, in a third embodiment, a protective layer 4" is mated to the switchable film 3 through an adhesive layer 5, and the adhesive layer 5 is made of, but is not limited to ionic plastic polymer, ethylene-vinyl acetate (EVA), cast-in-place (CIP) liquid resin and thermoplastic polyurethane (TPU).

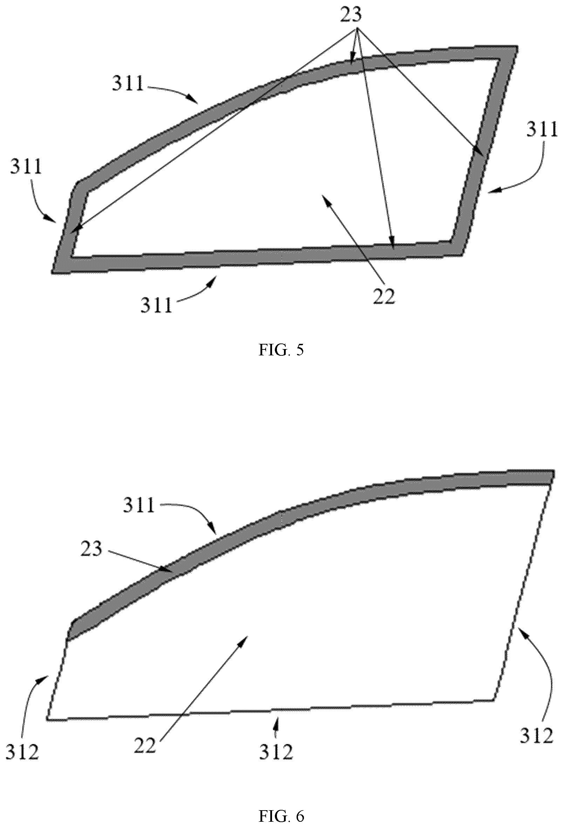

As illustrated in FIG. 5, in this embodiment, each of the edge portions 31 of the switchable film 3 is the visible edge portion 311, and is provided with the corresponding light-shielding portion 23 for shielding.

As illustrated in FIGS. 6 to 12, the switchable film 3 is used to fit on a mounting body, at least one edge portion 31 of the switchable film 3 is a mounting edge portion 312, and a splicing position of the mounting edge portion 312 and the protective layer 4 can be shielded by the mounting body. Since a joint bright line of the splicing position of the mounting edge portion 312 and the protective layer 4 is shielded by the mounting body, it is unnecessary to dispose corresponding light-shielding portion 23 on the bonding layer 2 for shielding. The numbers and the positions of the visible edge portion 311 and the mounting edge portion 312 are not particularly limited, so long as it is ensured that the edge portion 31 observable when the switchable glass is fitted on the mounting body can be shielded by the light-shielding portion 23.

Specifically, the four edge portions 31 of the switchable film 3 are a top edge portion, a front edge portion, a rear edge portion and a bottom edge portion, respectively. The mounting edge portion 312 may be shielded by the mounting body by being located at a fringe portion where the switchable glass is fitted with the mounting body, or by being located at a fringe portion where the switchable glass extends into the mounting body.

As illustrated in FIG. 6, in a fourth embodiment, the top edge portion is shielded by one light-shielding portion 23. For the front edge portion, the rear edge portion and the bottom edge portion, no corresponding shading portion 23 is provided.

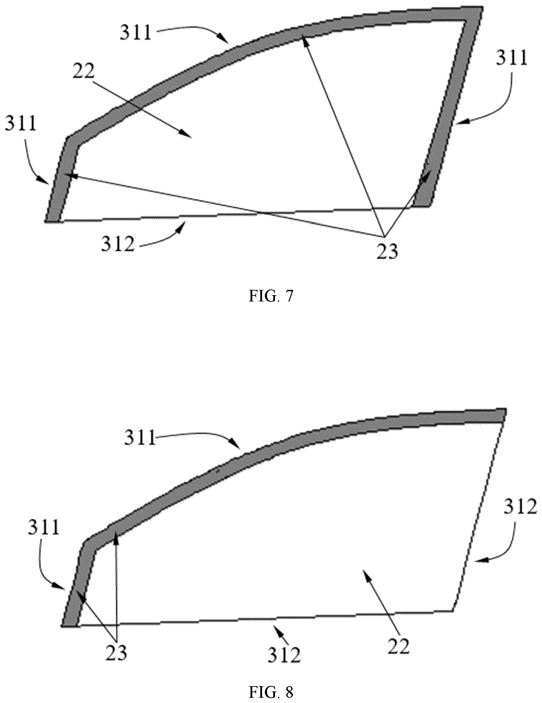

As illustrated in FIG. 7, in a fifth embodiment, the top edge portion, the front edge portion and the rear edge portion are shielded by three corresponding light-shielding portions 23, and only for the bottom edge portion, no corresponding light-shielding portion 23 is provided.

As illustrated in FIG. 8, in a sixth embodiment, the top edge portion and the front edge portion are shielded by two corresponding light-shielding portions 23. For the rear edge portion and the bottom edge portion, no corresponding light-shielding portion 23 is provided.

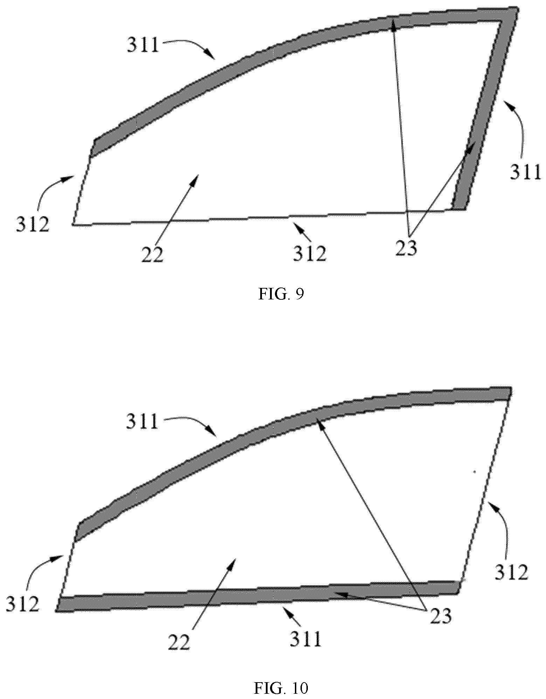

As illustrated in FIG. 9, in a seventh embodiment, the top edge portion and the rear edge portion are shielded by two corresponding light-shielding portions 23. For the front edge portion and the bottom edge portion, no corresponding light-shielding portion 23 is provided.

As illustrated in FIG. 10, in an eighth embodiment, only the top edge portion and the bottom edge portion are shielded by two corresponding light-shielding portions 23. For the front edge portion and the rear edge portion, no corresponding light-shielding portion 23 is provided.

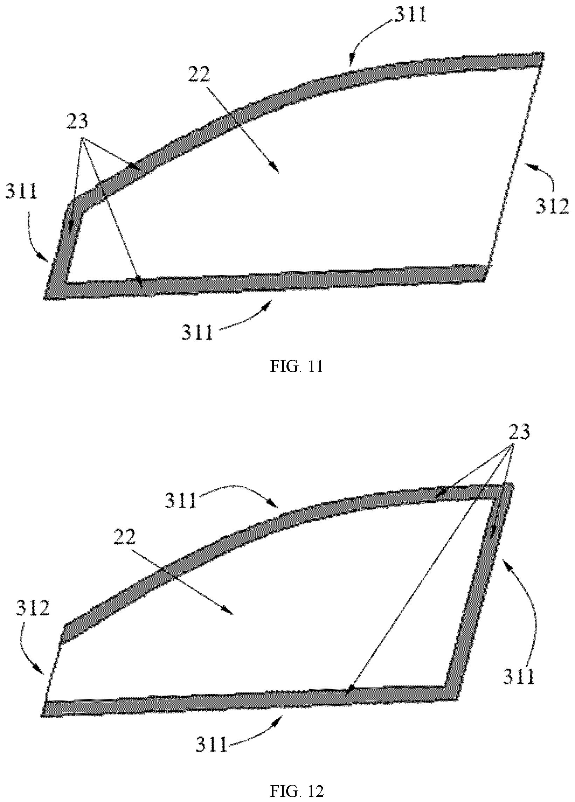

As illustrated in FIG. 11, in a ninth embodiment, the top edge portion, the bottom edge portion and the front edge portion are shielded by three corresponding light-shielding portions 23. Only for the rear edge portion, no corresponding light-shielding portion 23 is provided.

As illustrated in FIG. 12, in a tenth embodiment, the top edge portion, the bottom edge portion and the rear edge portion are shielded by three corresponding light-shielding portions 23. Only for the front edge portion, no corresponding light-shielding portion 23 is provided.

The use scenario of the switchable glass is not particularly limited. As illustrated in FIG. 2, in this embodiment, the mounting body is a vehicle door body. Optionally, the mounting body is a sunroof body, and the switchable glass is a sunroof glass to be mounted on the sunroof body. Optionally, the mounting body is a front window body, and the switchable glass is a front windscreen to be mounted on the front window body. Optionally, the mounting body is a rear window body, and the switchable glass is a rear windscreen to be mounted on the rear window body. Optionally, the mounting body is any other structure, such as a door or a window on a building.

The shape of the glass plate is not particularly limited, and may be adjusted according to the actual mounting needs. In terms of the color, the glass plate includes but is not limited to a green transparent glass, a white transparent glass, a gray transparent glass and an ultraviolet-proof glass, which may be selected according to actual needs.

### Embodiment 2

The present disclosure further provides a vehicle door assembly which includes a switchable glass. The switchable glass in this embodiment has the same working principle and advantageous effects as the switchable glass in Embodiment 1, and will not be repeated here.

As illustrated in FIG. 2, the switchable glass is the vehicle door glass fitted on the vehicle door body, thereby forming a liftable (movable) side window with a dimming function. In the present disclosure, by disposing the light-shielding portion 23 on the bonding layer 2, it is unnecessary to print a black ink layer on the surface of the switchable glass, so as to prevent the "scraping" or "friction" between the exposed black ink layer and the vehicle door body from causing a damage or failure of the black ink layer, and hindering the lifting or other activities of the switchable glass. Specifically, the two glass plates 1 are an outer-layer glass plate 12 and an inner-layer glass plate 11, respectively, with the outer-layer glass plate 12 facing outside of the vehicle and the inner-layer glass plate 11 facing inside of the vehicle.

As illustrated in FIG. 2, in order to better reflect the difference in the shapes of the outer-layer glass plate 12 and the inner-layer glass plate 11, the overlapping portion of the outer-layer glass plate 12 on the inner-layer glass plate 11 is filled with lines, and in fact, both the outer-layer glass plate 12 and the inner-layer glass plate 11 are transparent. The outer-layer glass plate 12 is a tempered glass, and the inner-layer glass plate 11 is a chemically tempered/strengthened glass. The outer-layer glass plate 12 extends downward relative to the inner-layer glass plate 11 to form a mounting portion 121, and the outer-layer glass plate 12 is used to connect to a lifting mechanism. By making the outer-layer glass plate 12 with the tempered glass, and making the inner-layer glass plate 11 with the chemically tempered/strengthened glass, it ensures that the switchable glass can bear an external load, and the overall weight of the switchable glass can be reduced by taking advantage of the light weight of the chemically tempered/strengthened glass. In addition, since the chemically tempered/strengthened glass is thin, by disposing the mounting portion 121 on the outer-layer glass plate 12, it can avoid punching holes in the inner-layer glass plate 11 and ensure the stability of the connection between the switchable glass and the lifting mechanism. Specifically, the inner-layer glass plate 11 has a thickness of 0.7 mm to 1.1 mm. The outer-layer glass plate 12 has a thickness of 3.2 mm to 6.0 mm.

As illustrated in FIG. 13, in an eleventh embodiment, the outer-layer glass plate 12 and the inner-layer glass plate 11 have the same shape. At least one of the two glass plates 1 is a semi-tempered glass or a heat strengthened glass.

### Embodiment 3

The present disclosure further provides a vehicle which includes a switchable glass. The switchable glass of this embodiment has the same working principle and advantageous effects as the switchable glass of Embodiment 1, and will not be repeated here.

Those described above are just several embodiments of the present disclosure, and those skilled in the art can make various modifications or variations to the embodiments of the present disclosure according to the contents disclosed in the application document without departing from the spirit and scope of the present disclosure.

## Claims

1. A switchable glass, comprising:
two glass plates;
at least one switchable film, which has a plurality of edge portions;
at least two bonding layers sandwiched between two of the glass plates, wherein each of the bonding layers comprises at least one light-shielding portion and a light-transmitting portion which are connected to each other, and the switchable film is sandwiched between the light-transmitting portions of two of the adhesive layers; and
a protective layer spliced with a plurality of edge portions of the switchable film and sandwiched between two of the bonding layers, wherein at least one of the edge portions of the switchable film is a visual edge portion, and a splicing position of the visual edge portion and the protective layer is sandwiched between the light-shielding portions of two of the bonding layers.

2. The switchable glass according to claim 1, wherein
the bonding layer comprises a first adhesive film, which has a transparent area constituting the light-transmitting portion and a colored area which constituting the light-shielding portion.

3. The switchable glass according to claim 2, wherein
the protective layer is a second adhesive film, which is transparent or colored.

4. The switchable glass according to claim 3, wherein
the glass plate, the first adhesive film, the switchable film and the second adhesive film are integrated by hot pressing.

5. The switchable glass according to any one of claims 1 to 4, wherein
the glass plate, the bonding layer and the switchable film are integrated by hot pressing; the bonding layer has a plurality of fringe portions, and the fringe portions of two of the bonding layers are attached to each other during hot pressing to shield at the outside of the edge portion of the switchable film to form the protective layer.

6. The switchable glass according to claim 5, wherein
the switchable film has a thickness less than or equal to 0.2 mm.

7. The switchable glass according to claim 1, wherein the bonding layer and the protective layer are made of any one or combinations selected from polyvinyl alcohol, polycarbonate, ethylene vinyl acetate, thermoplastic polyurethane, polyoxymethylene, polybutylene terephthalate, polyethylene vinyl acetate, polyethylene naphthalate, polyvinyl chloride, polyvinyl fluoride, polyacrylate, polymethylmethacrylate and polyurethane.

8. The switchable glass according to claim 1, wherein
the protective layer is mated to the switchable film through an adhesive layer.

9. The switchable glass according to claim 1, wherein
a distance between a joint position of the light-shielding portion and the light-transmitting portion and the splicing position of the visible edge portion and the protective layer is not less than 3 mm.

10. The switchable glass according to claim 1, wherein
the switchable film is fitted on a mounting body, at least one edge portion of the switchable film is a mounting edge portion, and a splicing position of the mounting edge portion and the protective layer is capable of being shielded by the mounting body.

11. A vehicle door assembly, comprising the switchable glass according to any one of claims 1 to 10,
the switchable glass is fitted on a vehicle door body, and the two glass plates are an outer-layer glass plate and an inner-layer glass plate respectively, with the outer-layer glass plate facing outside of the vehicle and the inner-layer glass plate facing inside of the vehicle.

12. The vehicle door assembly according to claim 11, wherein
the outer-layer glass plate is a tempered glass, and the inner-layer glass plate is a chemically tempered glass.

13. A vehicle, comprising the switchable glass according to any one of claims 1 to 10.
